Europäisches Patentamt

European Patent Office

Office européen des brevets

(11) Veröffentlichungsnummer: **0 204 957 B1**

# (12) EUROPÄISCHE PATENTSCHRIFT

(45) Veröffentlichungstag der Patentschrift: **29.04.92**

(21) Anmeldenummer: **86106155.4**

(22) Anmeldetag: **06.05.86**

(51) Int. Cl.⁵: **G11B 5/008**, G11B 5/584,
G11B 5/58, G11B 5/588,
G11B 5/52

(54) Verfahren zur Abtastung einer Schrägspuraufzeichnung.

(30) Priorität: **14.05.85 DE 3517317**

(43) Veröffentlichungstag der Anmeldung:
**17.12.86 Patentblatt 86/51**

(45) Bekanntmachung des Hinweises auf die
Patenterteilung:
**29.04.92 Patentblatt 92/18**

(84) Benannte Vertragsstaaten:
**AT BE CH DE FR GB IT LI LU NL SE**

(56) Entgegenhaltungen:
EP-A- 0 091 764
EP-A- 0 103 463
AT-B- 365 353

PATENT ABSTRACTS OF JAPAN, unexamined applications, P Field, Band 9, Nr, 210, 28.
August 1985, THE PATENT OFFICE JAPANE-
SE GOVERNMENT, Seite 44 P 383

PATENT ABSTRACTS OF JAPAN, unexamined applications, P Field, Band 9, Nr. 259, 17.
Oktober 1985 THE PATENT OFFICE JAPANE-

SE GOVERNMENT, Seite 24 P 397

(73) Patentinhaber: **Deutsche Thomson-Brandt
GmbH
Hermann-Schwer-Strasse 3 Postfach 1307
W-7730 Villingen-Schwenningen(DE)**

(72) Erfinder: **Scholz, Werner, Dipl.-Ing.
Osterstrasse 20
W-3007 Gehrden(DE)**

(74) Vertreter: **Einsel, Robert, Dipl.-Ing.
Deutsche Thomson-Brandt GmbH Patent-
und Lizenzabteilung Göttinger Chaussee 76
W-3000 Hannover 91(DE)**

**Beschreibung**

Für die Abtastung breitbandiger Signale wie z.B. von einem analogen oder digitalen Bildsignal, einem digitalen Tonsignal und sonstigen brandbandigen Datensignalen mit nur einem jeweils mit dem Band in Kontakt befindlichen Abtastelement wird eine hohe Abtastgeschwindigkeit, d.h. Relativgeschwindigkeit zwischen dem Abtastelement, z.B. einem Magnetkopf, und dem Aufzeichnungträger, z.B. einem Magnetband, benötigt. Diese Abtastgeschwindichkeit liegt beim heutigen Videorecorder in der Größenordnung vom 500 cm pro Sekunde.

Bei dem sogenannten Schrägspurverfahren werden die Signale entlang Spuren aufgezeichnet, die sich unter einem geringen Winkel von etwa 6-7° schräg zur Bandkante erstrecken. Wegen der erhöhten geometrischen Länge eines Spurabschnittes kann auf einem derartig schräg zur Bandkante verlaufenden Spurabschnitt ein Halbbild eines Fernsehsignales aufgezeichnet werden.

Das Schrägspurverfahren hat folgende Eigenart: Wenn die Längsgeschwindigkeit des Magnetbandes bei der Wiedergabe gleich der Längsgeschwindigkeit bei der Aufnahme ist, also normale Wiedergabe erfolgt, laufen die Magnetköpfe parallel zu den bei der Aufzeichnung beschriebenen Spuren. Wenn die Längsgeschwindigkeit des Magnetbandes jedoch von der Längsgeschwindigkeit bei der Aufnahme abweicht, z.B. bei Zeitraffung, Zeitlupe, Standbild oder schnellem Vorlauf, hat die abgetastete Spur bei der Wiedergabe zwangsläufig einen anderen Winkel als die bei der Aufnahme geschriebene und auf dem Magnetband befindliche Spur. Der Kopf kann dann also nicht mehr der aufgezeichneten Spur folgen.

Es ist aus EP-A-0 091 764 bekannt, mit sogenannten Spurfolge-Nachsteuersystemen, z.B. DTF (Dynamic TrackFollowing), mit elektromechanischen Steuermitteln den Kopf senkrecht zur Spurrichtung so zu steuern, daß der Kopf der aufgezeichneten Spur folgt. Diese Lösung ist jedoch wegen eines zu geringen Hubes nicht für mehrere aufeinander folgende Spuren geeignet.

Der Erfindung liegt die Aufabe zugrunde, ein Verfahren zur Abtastung einer Schrägspuraufzeichnung zu schaffen, bei dem bei Verwendung eines verstellbaren Kopfrades auch bei Sonderläufen, also erhöter und verringerter Längsgeschwindigkeit des Magnetbandes, jeweils mehrere aufeinander folgende Spuren vollständig abgetastet werden können.

Diese Aufgabe wird durch die im Anspruch 1 beschriebene Erfindung gelöst. Vorteilhafte Weiterbildungen der Erfindung sind in den Unteransprüchen beschrieben.

Die Erfindung beruht auf folgender Überlegung. Bei der Wiedergabe können die Magnetköpfe den aufgezeichneten Spuren ansich nur dann genau folgen, wenn die Längsgeschwindigkeit des Magnetbandes gleich der bei der Aufnahme ist. Wenn die Geschwindigkeit von diesem Wert abweicht, weicht auch die bei der Wiedergabe zurückgelegte Spur in der Winkellage von der bei der Aufnahme geschriebenen Spur ab. Wenn jetzt die Längsgeschwindigkeit des Magnetbandes bei der Wiedergabe ermittelt wird, so kann aus diesem Wert, d.h. der Abweichung dieses Wertes von der Geschwindigkeit bei der Aufnahme, eine Stellgröße gewonnen werden, die ein Maß ist für die Abweichung der bei der Wiedergabe gelesenen Spur von der bei der Aufnahme geschriebenen Spur. Deshalb kann diese Stellgröße dazu dienen, die Abtastung bei der Wiedergabe so zu korrigieren, daß sich der Magnetkopf parallel zur aufgezeichneten Spur bewegt. Zu diesem Zweck wird der Bewegung des Kopfradeses eine Geschwindigkeitkomponente überlagert, die quer zur Spurrichtung gerichtet und von der genannten Stellgröße gesteuert ist.

Die erfindungsgemäße Lösung ermöglicht, daß mit einer Spurregelung auch bei abweichender Längsgeschwindigkeit des Magnetbandes bei der Wiedergabe der Magnetkopf genau den aufgezeichneten Spuren folgen kann. Dies ist auch dann möglich, wenn die Längsgeschwindigkeit bei der Wiedergabe in weiten Grenzen von der Längsgeschwindigkeit bei der Aufnahme abweicht und ein großer Hub in der Bewegung des Magnetbandes quer zur Spurrichtung erforderlich ist. Es wird daher ermöglicht, daß auch bei abweichender Längsgeschwindigkeit eine korrekte Abtastung mehrerer bei der Aufzeichnung geschriebener aufeinanderfolgender v Spuren erfolgen kann.

Die Erfindung wird in folgenden anhand der Zeichnungen erläutert. Darin zeigen

Fig. 1 die Anordnung einer Schrägspur auf dem Magnetband,

Fig. 2 die Umschlingung der Kopftrommel durch das Magnetband,

Fig. 3 eine Folge von Schrägspuren auf dem Magnetband,

Fig. 4 die Kopftrommel mit dem Magnetband mit den Verhältnissen bei schnellem Vorlauf,

Fig. 5 die in Fig. 4 wirksamen Verhältnisse und

Fig. 6 ein Ausführungsbeispiel, bei dem sich die Schrägspuren jeweils nur über die halbe geometrische Breite des Magnetbandes erstrecken.

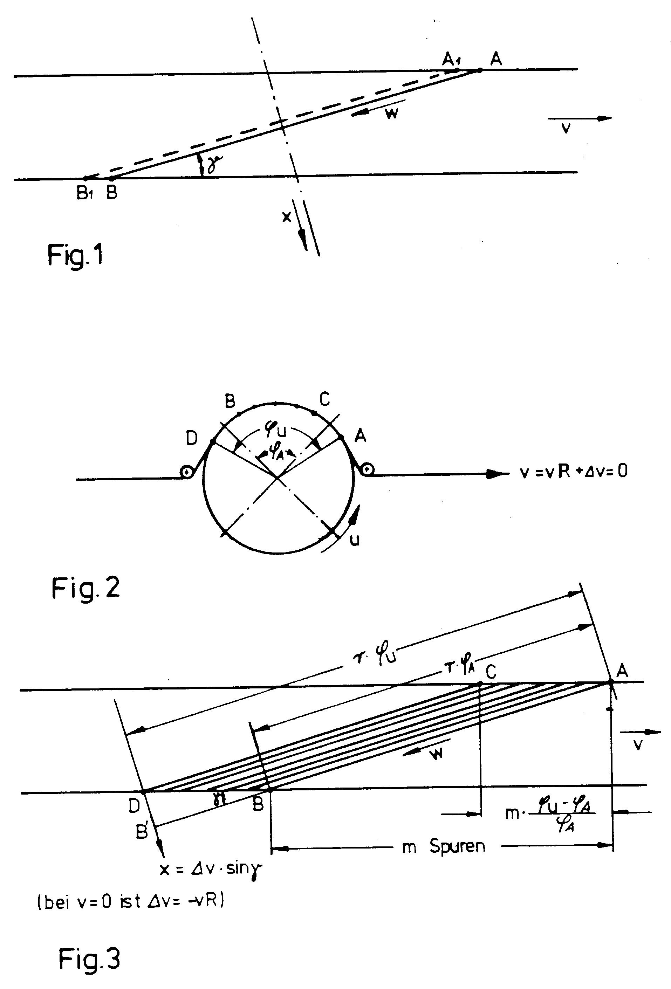

Fig. 1 zeigt eine Aufzeichnungsspur, die bei A beginnt und bei B endet auf einem Magnetband. Die Spur hat einen Spurwinkel $\gamma$ gegenüber der Längsrichtung des Bandes. Der Spurwinkel $\gamma$ ist nicht nur von dem Neigungswinkel derKopfradachse, sondern auch von der Bandgeschwindigkeit $v_R$ bei der Aufzeichnung abhängig. Wenn Aufzeichnung und Wiedergabe mit gleicher Bandgeschwindigkeit und gleicher Kopfraddrehzahl durchgeführt werden, gibt es keine Schwierigkeiten mit der Spurführung, da die Kopfwege bei der Wiedergabe parallel zu den aufgezeichneten Spuren verlaufen. Durch Feinregelung der Bandgeschwindigkeit v werden die Köpfe genau auf der ihnen zugeordneten Spur (Azimut) gehalten.

Diese Spurführung ist bei den Sonderläufen nicht möglich, da die Bandgeschwindigkeit $v = v_R + \Delta v$ gegenüber der Bandgeschwindigkeit bei der Aufzeichnung $v_R$ verändert ist. Der Unterschied $\Delta v$, dessen Vorzeichen richtungsabhängig ist, beträgt z.B. beim Suchlauf das 10-20-fache von $v_R$. Bei Suchlauf werden während der für eine Spur erforderlichen Abtastzeit T mehrere Spuren von den Köpfen überstrichen. Der Spurwinkel und die Abtastgeschwindigkeit w sind von Betrag und Richtung der Bandgeschwindigkeit v abhängig.

Wenn sich das in Fig. 1 dargestellte Band mit der Geschwindigkeit $v = v_R$ bewegt, befindet sich der zweite Aufzeichnungskopf am Punkt A1, wenn der erste Kopf B erreicht hat. Bei v = o würden die Spuren aller Köpfe zusammenfallen und parallel zur Strecke A1 und B verlaufen. Man erkennt hieraus, daß der Spurwinkel $\gamma$ durch die Bandgeschwindigkeit verkleinert wird, wenn Band- und Kopfbewegung entgegengesetzt verläuft. Bei gleichsinniger Bewegung wird der Spurwinkel $\gamma$ vergrößert. Die Veränderung des Spurwinkels bei Bandgeschwindigkeiten, die von der Geschwindigkeit $v_R$ abweichen, kann ausgeglichen werden durch eine Relativbewegung x zwischen Abtastkopf und Aufzeichnungsträger quer zur Spurrichtung. Betrag und Richtung der Geschwindigkeit x können so eingestellt werden, daß bei einer Bandgeschwindigkeit $v = v_R + \Delta v$ der von den Köpfen beschriebene Weg parallel zu den Spuren auf dem Träger verläuft. Dieses ist näherungsweise der Fall, wenn $x = \Delta v . \sin\gamma$. Durch eine Feinregelung der Geschwindigkeit x können die Köpfe dann auf der ihnen zugeordneten Spur gehalten werden.

Bei der normalen Schrägspurabtastung wird der Zeitpunkt der Kopfumschaltung durch die Winkelstellung des Kopfrades bestimmt. Dieses ist nicht mehr möglich, wenn die Aufgabe gestellt ist, bei veränderter Bandgeschwindigkeit mehrere aufeinanderfolgende Spuren vollständig abzutasten.

Bei der digitalen Videoaufzeichnung ist z.B. das Signal eines Bildes in mehreren aufeinanderfolgenden Spuren aufgezeichnet.

Bei den Sonderläufen wird in regelmäßigen Zeitabständen die Information eines Bildes von einem Bildspeicher aufgenommen. Die Wiedergabe dieses Bildes erfolgt dann, bis die Information eines weiteren Bildes zur Verfügung steht.

Wie die Kopfumschaltung durchzuführen ist, damit die Information mehrerer aufeinanderfolgender Spuren vollständig gewonnen wird, soll nun anhand von Fig. 2 und 3 gezeigt werden. In Fig. 2 ist ein Kopfrad mit 4 Aufzeichnungsköpfen dargestellt. Der Umschlingungswinkel des Bandes $\phi$u ist größer als dem Kopfabstand (90°) entspricht. Für die normale Abtastung einer Schrägspuraufzeichnung würde ein Umschlingungswinkel, der gleich dem Kopfabstand $\phi$A ist, ausreichen.

In den Fig. 3 und 5 sind jeweils Folgen von Spuren abgebildet, die bei verschiedenen Bandgeschwindigkeiten abgetastet werden sollen. Es wird z.B. angenommen, daß auf den normalen Umschlingungswinkel $\phi$A m = 240 Spuren entfallen, und daß auf die Erweiterung des Umschlingungsbereichs $\phi$u- $\phi$A 80 Spuren entfallen.

Fig. 3 gilt für den Fall v = 0, d.h. $\Delta v = -v_R$. Aus Fig. 2 ist die Winkelstellung der Köpfe bei der Signalabtastung in den Punkten A...D ersichtlich.

Die Abtastung einer Folge von Spuren beginnt jeweils, wenn die Hubrichtung des Kopfrades zur x-Richtung entgegengesetzt verläuft (Vorzeichen von $\Delta v$ negativ) und ein Kopf bei der Winkelstellung, die etwa dem Punkt A in Fig. 2 entspricht, den Beginn einer Spur bzw. den Beginn des interessierenden Signalbereichs innerhalb einer Spur abtastet. Es wird angenommen, daß Beginn und Ende der Spuren bzw. der z.B. für eine Bildwiedergabe wichtigen Signalbereiche durch bestimmte Signalverläufe erkennbar sind.

Nach dem die Abtastung einer Spurenfolge gestartet ist, kann durch das Ende jeder Spur die Umschaltung auf den nächsten Kopf ausgelöst werden. Wenn weder eine Kippung des Kopfrades noch eine Verschiebung einzelner Köpfe vorgenommen wurde, muß sich unabhängig von der Bandgeschwindigkeit der jeweils folgende Kopf am Anfang (A,C) seiner Spur befinden, wenn der vorhergehende Kopf das Ende (B,D) seiner Spur abtastet.

Bei einer axialen Bewegung des Kopfrades (in x-Richtung) mit der Geschwindigkeit $x = -v_R . \sin\gamma$ bewegen sich die Köpfe bei stehendem Band parallel zu den Spuren. Durch Auswertung der mit dem Spursignal aufgezeichneten ATF-Signale erfolgt die Regelung auf die dem jeweiligen Kopf zugeordnete Spur. Aus Fig. 2 und 3 ist ersichtlich, daß bei stehendem Band (v = 0) die der Erweiterung des Umschlingungsbereichs entsprechende Anzahl von Spuren (bei obigem Zahlenbeispiel 80) vollständig abgetastet werden kann.

Der Hubbereich für die Relativbewegung x quer zur Spurrichtung muß größer sein als die der Umschlingungsvergrößerung entsprechende Strecke B'D (s. Fig.3). Die Vorschubgeschwindigkeit x in Abtastrichtung wird durch die Bandgeschwindigkeit bestimmt x≅ Δv. sinγ. Der jeweilige Rücklauf kann mit beliebiger Geschwindigkeit erfolgen. Durch die Vergrößerung des Hubbereiches werden Wegstrecken für die Beschleunigung bzw. Verzögerung bei der Richtungsumkehr verfügbar gemacht, so daß die Strecke B'D in Abtastsrichtung mit konstanter Geschwindingkeit x durchlaufen werden kann.

Mit Fig. 3 und 5 werden nun die Verhältnisse bei schnellem Vorlauf erläutert, und zwar für den Fall, daß wie in Fig. 1 dargestellt, die Aufzeichnungsrichtung (W) entgegengesetzt zur Bandbewegung (v) verläuft.

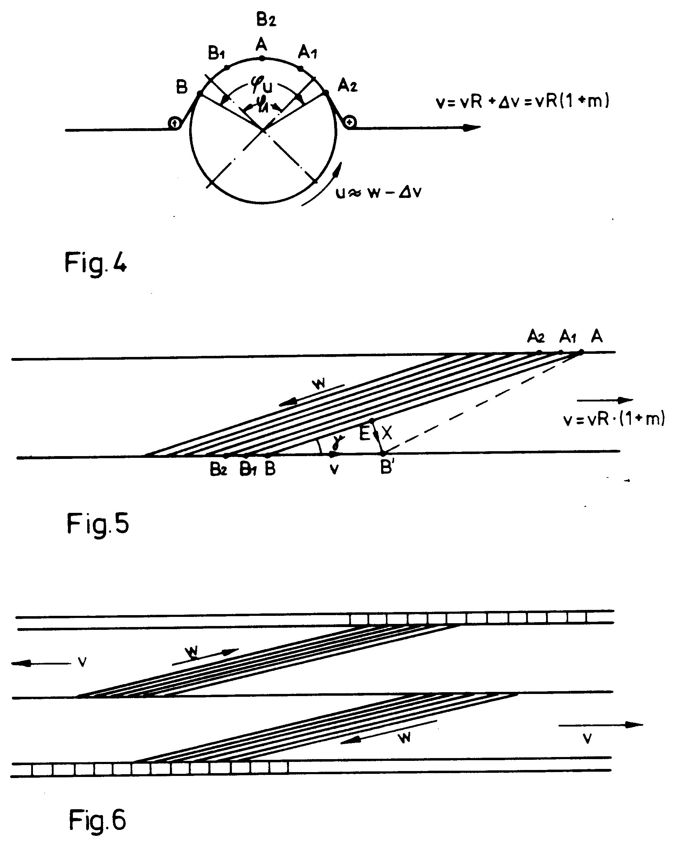

Es wird wieder angenommen, daß auf die Erweiterung des Umschlingungsbereiches ($\phi$u-$\phi$A) 80 Spuren fallen. Die in Fig. 4 und 5 angegebenen Punkte A,A1,A2 sowie B,B1,B2 gelten für 81-fache Bandgeschwindigkeit

$$\left(\frac{\Delta V}{V_R} = 80\right).$$

Man erkennt, daß hierbei hierbei 3 aufeinanderfolgende Spuren vollständig abtastbar sind. Bei dieser hohen Bandgeschwindigkeit ist es angebracht, die Abtastgeschwindigkeit w durch Anpassung der Kopfraddrehzahl auf ihrem Nennwert zu halten. Diese Anpassung ist bei bekannter Bandgeschwindigkeit leicht durchführbar. Bei kleinem Spurwinkel $\gamma$ ist dann die Umfangsgeschwindigkeit des Kopfrades u≈w-Δv, wobei w = const die Abtastgeschwindigkeit ist. Man erhält dadurch den Vorteil, daß die Zeitverhältnisse bei den Sonderläufen mit dem Normalbetrieb übereinstimmen. Man kann dann z.B. die Kopfumschaltung zeitabhängig durchführen. Die Strecke EB' in Fig. 5 ist genauso groß wie die Strecke DB' in Fig. 3, denn in Fig. 3 werden bei

$$\left|\frac{\Delta v}{v_R}\right| = 1$$

80 Spuren abgetastet. In Fig. 5 wird bei

$$\left|\frac{\Delta v}{v_R}\right| = 80$$

eine Spur abgetastet.

Die Erweiterung des Umschlingungswinkels erlaubt es, bei dieser Geschwindigkeit 3 aufeinanderfolgende Spuren abzutasten. Die Vorschubbewegung muß dabei das Dreifache der Strecke EB' durchlaufen. In Tab. 1 ist die Anzahl der abtastbaren Spuren und die Größe des hierbei erforderlichen Hubbereiches quer zur Spurrichtung für verschiedene Bandgeschwindigkeiten zum bisher verwendeten Zahlenbeispiel zusammengestellt. Die Zahlen für den schnellen Vorlauf lassen sich leicht mit Hilfe von Fig. 4 und 5 überprüfen. Die Verhältnisse beim schnellen Rücklauf wurden bereits mit Fig. 2 und 3 veranschaulicht, wenn man den Bandstillstand als Rücklauf mit |Δv| = |vR| betrachtet. In diesem Fall konnten mit einem Hub entsprechend der Strecke DB' 80 Spuren abgetastet werden. Durch einfache Überlegungen erkennt man, daß bei |Δv| = 80.|vR| mit dem gleichen Hub nur eine vollständige Spur abtastbar ist. Daraus ergeben sich dann die übrigen Zahlenwerte der Tab. 1 für den schnellen Rücklauf. Für den Fall, daß bei der Aufzeichnung Kopf- und Bandbewegung gleichsinnig verlaufen, kann leicht eine entsprechende Tabelle aufgestellt werden. Anhand von Fig. 5 wurde gezeigt, daß bei Schnellauf mit gegensinniger Kopf-Band-Bewegung verhältnismäßig große Vorschubbereiche sinnvoll sein können. Wenn nun die Schrägspuren nahezu die volle Breite eines Bandes einnehmen, wird man den Umschlingungswinkel nicht unnötig groß wählen und schon gar nicht die Köpfe quer zur Spurrichtung verschieben, um zu vermeiden, daß die Köpfe beim "Eintauchen" in das Band auf eine Bandkante aufschlagen. Fig. 6 zeigt, wie die Spuren auf dem Band anzuordnen sind, damit diese Gefahr beseitigt ist. In jeder Aufzeichnungsrichtung wird nur eine Hälfte des Bandes bespielt. Am Rand des Bandes kann eine Kontrollspur oder eine Pilotfrequenz aufgezeichnet sein. Die Abtastrichtung der Schrägspuren verläuft von der Bandmitte zur Bandkante. Bei der Aufzeichnung wird das Signal so auf die Köpfe geschaltet, daß die Spuren auf der anderen Bandhälfte nicht beschädigt werden. Beim Abspielvorgang ist selbst bei stark vergrößerter Umschlingung und Verschiebung der Köpfe quer zur Spurrichtung der Eintauchpunkt der Köpfe immer genügend weit von der Bandkante entfernt. Die folgende Tabelle 1 zeigt:
Zahl der abtastbaren Spuren z und relativer Hub h/ho in Abhängigkeit von der relativen Bandgeschwindigkeitsabweichung bei m = 240 und $\phi u - \phi A = \phi A/3$ :

Tabelle 1

| $\Delta v / v_R$ | z | h/ho |
|---|---|---|
| 80 | 3 | 3 |
| 40 | 4 | 2 |
| 20 | 6 | 1,5 |
| 10 | 10 | 1,25 |
| 5 | 18 | 1,13 |
| 2,5 | 34 | 1,07 |
| 0 | ∞ | 0 |
| -1 | 80 | 1 |
| -2 | 40 | 1 |
| -5 | 16 | 1 |
| -10 | 8 | 1 |
| -20 | 4 | 1 |
| -40 | 2 | 1 |
| -80 | 1 | 1 |

Die beschriebene Verstellung der Köpfe relativ zum Träger quer zur Spurrichtung erfolgt vorzugsweise durch Verschiebung des Kopfrades quer zur Spurrichtung, also in Richtung der Achse des Kopfrades.

**Patentansprüche**

1. Verfahren zur Abtastung einer Schrägspuraufzeichnung mit einem rotierenden und mehrere Köpfe tragenden Kopfrad bei gegenüber der Aufzeichnung verändertem Verhältnis zwischen der Kopfgeschwindigkeit (u) und der Längsgeschwindigkeit (v) des Aufzeichnungsträgers, **gekennzeichnet durch** folgende Merkmale:
   a) Es werden zusammengehörende Signale feinhaltende Pakete, bestehend aus einer vorher bestimmten Anzahl direkt aufeinanderfolgender Signalspuren, abgetastet,
   b) aus der Geschwindigkeit (v) des Aufzeichnungsträgers wird eine Antriebsgröße zur Erzeugung einer Hubbewegung des Kopfrades in Richtung der Achse des Kopfrades quer zur Spurrichtung abgeleitet, wobei auch bei Sonderlaufen die Hubbewegung des Kopfrades kontinuierlich derartig erfolgt, daß sich der jeweils folgende Kopf am Anfang (A,C) seiner Spur befindet, wenn der vorhergehende Kopf das Ende (B,D) seiner Spur abtastet,
   c) die Länge des Band-Kopf-Kontaktes ist größer als die Länge der abzutastenden Signalspuren, wobei der Spurbereich für die Verwertung des Signals eines Kopfes innerhalb der Länge des Band-Kopf-Kontaktes verschiebbar ist.

2. Verfahren nach Anspruch 1, dadurch gekennzeichnet, daß zur Messung der Längsgeschwindigkeit (v) des Aufzeichnungsträgers mit einem feststehenden Kopf eine Pilotspur oder eine Kontrollspur abgetastet wird.

3. Verfahren nach Anspruch 1, dadurch gekennzeichnet, daß in Abhängigkeit von der Längsgeschwindigkeit (v) des Aufzeichnungsträgers die Kopfgeschwindigkeit (u) so verändert wird, daß die Abtastgeschwindigkeit (w) ihren Nennwert beibehält.

4. Verfahren nach einem oder mehreren der vorhergehenden Ansprüche 1 bis 3, dadurch gekennzeichnet, daß die Relativbewegung zwischen den Köpfen und dem Aufzeichnungsträger quer zur Spurrichtung so gesteuert wird, daß der Kopfweg parallel zu den Spuren auf dem Träger verläuft.

5. Verfahren nach Anspruch 4, dadurch gekennzeichnet, daß mit Hilfe einer Regelschaltung, die das Signal einer Kontrollspur oder in den Schrägspuren enthaltene Automatic Track Following-Signale auswertet, die korrekte Spurführung erfolgt.

**6.** Verfahren nach einem oder mehreren der vorhergehenden Ansprüche, dadurch gekennzeichnet, daß die Abtastung mit einem rotierendem Kopfrad erfolgt, an dessen Umfang 4 um 90° gegeneinanderversetzte Köpfe angeordnet sind.

**7.** Verfahren nach Anspruch 6, dadurch gekennzeichnet, daß aufeinanderfolgende Köpfe unterschiedliche Azimutwinkel besitzen.

**8.** Verfahren nach Anspruch 6, dadurch gekennzeichnet, daß die Kopfradumschlingung des Trägers etwa 120° beträgt, während die Spurlänge auf dem Träger einer Umschlingung von 90° entspricht.

**9.** Verfahren nach einem oder mehreren der vorhergehenden Ansprüche, dadurch gekennzeichnet, daß die Kopfumschaltung aus dem abgetasteten Signal gesteuert wird.

**10.** Verfahren nach einem oder mehreren der vorhergehenden Ansprüche, dadurch gekennzeichnet, daß bei einem bandförmigen Aufzeichnungsträger jeweils nur eine geometrische Hälfte der Breite des Bandes von den Schrägspuren eingenommen wird und die Abtastbewegung der Köpfe von der Bandmitte zur Bandkante verläuft (Fig. 6).

**11.** Verfahren nach Anspruch 1, dadurch gekennzeichnet, daß eine Schaltung zur Messung der jeweiligen Längsgeschwindigkeit (v) und Gewinnung der Antriebsgröße vorgesehen ist.

**12.** Verfahren nach Anspruch 1, dadurch gekennzeichnet, daß die Antriebsgröße durch eine vorgegebene Längsgeschwindigkeit (v) bestimmt ist.

**13.** Verfahren nach Anspruch 1, dadurch gekennzeichnet, daß die Relativbewegung zwischen den Köpfen und dem Träger quer zur Spurrichtung durch eine Verschiebung des die Köpfe tragenden Kopfrades in Richtung der Achse des Kopfrades erfolgt.

**Claims**

**1.** Method for the scanning of a helical scan record by means of a rotating head wheel bearing a plurality of heads, with a ratio between the head speed (u) and the longitudinal speed (v) of the record carrier which is varied with respect to the record, **characterised by the following features**:
a) Packets comprising matching signals, consisting of a previously determined number of signal tracks following directly on one another, are scanned,
b) from the speed (v) of the record carrier a drive value is obtained for producing a lifting movement of the head wheel in the direction of the axis of the head wheel obliquely to the track direction, the lifting movement of the head wheel, even in the case of special runs, taking place continuously in such a way that the respective following head is in each case located at the start (A, C) of its track when the preceding head is scanning the end (B, D) of its track,
c) the length of the tape-head contact is greater than the length of the signal tracks to be scanned, the track zone for the processing of the signal of a head being displaceable within the length of the tape-head contact.

**2.** Method according to claim 1, characterised in that for the measurement of the longitudinal speed (v) of the record carrier with a stationary head a pilot track or a control track is scanned.

**3.** Method according to claim 1, characterised in that the head speed (u) is varied as a function of the longitudinal speed (v) of the record carrier so that the scanning speed (w) retains its nominal value.

**4.** Method according to one or more of the preceding claims 1 to 3, characterised in that the relative movement between the heads and the record carrier oblique to the track direction is controlled so that the head path runs parallel to the tracks on the carrier.

**5.** Method according to claim 4, characterised in that the correct track following takes place by means of a control circuit which evaluates the signal of a control track or automatic track following signals contained in the oblique tracks.

**6.** Method according to one or more of the preceding claims, characterised in that the scanning takes place by means of a rotating head wheel at the periphery of which 4 heads mutually offset by 90° are disposed.

**7.** Method according to claim 6, characterised in that successive heads possess different azimuth angles.

**8.** Method according to claim 6, characterised in that the head wheel wrap-around of the carrier comes to some 120°, whereas the track length on the carrier corresponds to a wraparound of 90°.

**9.** Method according to one or more of the preceding claims, characterised in that the head change-over is controlled from the scanned signal.

**10.** Method according to one or more of the preceding claims, characterised in that in the case of a tape-type record carrier only one geometric half respectively of the width of the tape is taken up by the oblique tracks and the scanning movement of the heads runs from the tape centre to the tape edge (Fig. 6).

**11.** Method according to claim 1, characterised in that a circuit for measuring the respective longitudinal speed (v) and obtaining the drive value is provided.

**12.** Method according to claim 1, characterised in that the drive value is determined by a pre-set longitudinal speed (v).

**13.** Method according to claim 1, characterised in that the relative movement between the heads and the carrier obliquely to the track direction takes place by a displacement of the head wheel bearing the heads in the direction of the axis of the head wheel.

**Revendications**

**1.** Procédé pour le balayage d'un enregistrement hélicoïdal avec une roue des têtes rotative qui porte plusieurs têtes avec un rapport entre la vitesse des têtes (u) et la vitesse longitudinale (v) du support d'enregistrement qui est modifié par rapport à l'enregistrement, **caractérisé par** les caractéristiques suivantes :
a) des paquets qui contiennent des signaux formant un ensemble et qui sont constitués par un nombre prédéterminé de pistes de signaux directement consécutives sont balayés ;
b) à partir de la vitesse (v) du support d'enregistrement, il est dérivé une grandeur de commande pour produire un déplacement en levée de la roue des têtes dans le sens de l'axe de la roue des têtes transversalement par rapport au sens des pistes, le déplacement en levée de la roue des têtes étant effectué continuellement, même pour les modes spéciaux, de telle manière que la tête respectivement suivante se trouve au début (A, C) de sa piste lorsque la tête précédente balaie la fin (a. D) de sa piste ;
c) la longueur du contact bande-têtes est supérieure à la longueur des pistes de signaux à balayer, la zone des pistes pour l'exploitation du signal d'une tête pouvant être déplacée à l'intérieur de la longueur du contact bande-têtes.

**2.** Procédé selon la revendication 1, **caractérisé en ce** qu'une piste pilote ou une piste de contrôle est balayée pour mesurer la vitesse longitudinale (v) du support d'enregistrement avec une tête fixe.

**3.** Procédé selon la revendication 1, **caractérisé en ce** que la vitesse des têtes (u) est variée en fonction de la vitesse longitudinale (v) du support d'enregistrement de manière telle que la vitesse de balayage (w) garde sa valeur nominale.

**4.** Procédé selon l'une ou plusieurs des revendications précédentes 1 à 3, **caractérisé en ce** que le déplacement relatif entre les têtes et le support d'enregistrement transversalement par rapport au sens des pistes est commandé de manière telle que le trajet des têtes est parallèle aux pistes sur le support.

**5.** Procédé selon la revendication 4, **caractérisé en ce** que le guidage correct de la piste est effectué à l'aide d'un circuit de réglage qui exploite le signal d'une piste de contrôle ou les signaux de guidage de piste automatique contenus dans les pistes transversales.

**6.** Procédé selon l'une ou plusieurs des revendications précédentes, **caractérisé en ce** que le balayage se fait avec une roue des têtes rotative à la périphérie 4 de laquelle sont placées des têtes décalées de 90° les unes par rapport aux autres.

**7.** Procédé selon la revendication 6, **caractérisé en ce** que des têtes consécutives possèdent des angles azimutaux différents.

**8.** Procédé selon la revendication 6, **caractérisé en ce** que l'enroulement de la roue des têtes du support est d'environ 120° tandis que la longueur des pistes sur le support correspond à un enroulement de 90°.

**9.** Procédé selon l'une ou plusieurs des revendications précédentes, **caractérisé en ce** que la commutation des têtes est commandée à partir du signal balayé.

**10.** Procédé selon l'une ou plusieurs des revendications précédentes, **caractérisé en ce** que, pour un support d'enregistrement en forme de bande, seulement une moitié géométrique respective de la largeur de la bande est occupée par les pistes transversales et que le déplacement de balayage des têtes va du milieu de la bande au bord de la bande (figure 6).

**11.** Procédé selon la revendication 1, **caractérisé en ce** qu'un circuit est prévu pour mesurer la vitesse longitudinale respective (v) et pour obtenir la grandeur de commande.

**12.** Procédé selon la revendication 1, **caractérisé en ce** que la grandeur de commande est déterminée par une vitesse longitudinale prédéterminée (v).

**13.** Procédé selon la revendication 1, **caractérisé en ce** que le déplacement relatif entre les têtes et le support transversalement par rapport au sens des pistes est effectué par une translation de la roue des têtes qui porte les têtes dans le sens de l'axe de la roue des têtes.

Fig.1

Fig.2

$$x = \Delta v \cdot \sin \gamma$$

(bei $v = 0$ ist $\Delta v = -vR$)

Fig.3

Fig. 4

Fig. 5

Fig. 6